# EUROPÄISCHE PATENTSCHRIFT

(11) **EP 1 133 771 B1**
(45) Veröffentlichungstag und Bekanntmachung des Hinweises auf die Patenterteilung: **13.10.2010**
(21) Anmeldenummer: 99969963.0
(22) Anmeldetag: 15.11.1999
(51) Int. Cl.: G21C 9/016

(54) **VORRICHTUNG ZUM AUFFANGEN UND KÜHLEN EINER SCHMELZE**
DEVICE FOR COLLECTING AND COOLING A MELT
DISPOSITIF POUR RECUEILLIR ET REFROIDIR UNE MATIERE EN FUSION

(30) Priorität: 26.11.1998 DE 19854706
(43) Veröffentlichungstag der Anmeldung: 19.09.2001
(73) Patentinhaber: AREVA NP GmbH, 91052 Erlangen (DE)
(72) Erfinder: BITTERMANN, Dietmar, D-90765 Fürth (DE); FISCHER, Manfred, D-91054 Erlangen (DE); ALSMEYER, Hans, D-76327 Pfinztal (DE)
(74) Vertreter: Tergau & Pohl Patentanwälte
(86) Internationale Anmeldenummer: PCT/DE1999/003629
(87) Internationale Veröffentlichungsnummer: WO 2000/031746

(56) Entgegenhaltungen:
- EP-A- 0 736 877
- DE-A- 4 032 736
- US-A- 4 113 560
- KUCZERA B: "R&D ACTIVITIES ON SAFETY ASPECTS OF FUTURE PWR PLANTS PERFORMED AT KFK" NUCLEAR SAFETY,US,SUPERINTENDENT OF DOCUMENTS. WASHINGTON, Bd. 34, Nr. 2, 1. April 1993 (1993-04-01), Seiten 213-229, XP000463479 ISSN: 0029-5604

## Beschreibung

Die Erfindung betrifft eine Vorrichtung zum Auffangen und Kühlen einer Schmelze, insbesondere einer Kernschmelze in einem Containment eines Kernkraftwerkes.

Eine derartige Vorrichtung ist aus der DE 40 32 736 C2 bekannt. Sie dient zum Auffangen und Kühlen einer Kernschmelze in einem Kernkraftwerk. Dazu befindet sich unter dem Reaktordruckbehälter eine Auffangwanne aus hochwarmfestem Material. In der Auffangwanne sind Löcher angeordnet, die durch eine Opferschicht überdeckt sind. Dazu sind in den Löchern kurze Rohrstücke eingepasst, die sich nach oben erstrecken und innerhalb der Opferschicht enden. Ein Zwischenraum zwischen der Auffangwanne und dem Fundament des Kernkraftwerkes kann mit Kühlwasser geflutet werden.

Falls heiße Kernschmelze auf die Opferschicht auftrifft, wird die Opferschicht im Laufe der Zeit erodiert. Sowie die oberen Enden der Rohrstücke freigelegt sind, soll das unterhalb der Auffangwanne anstehende Kühlwasser in durch die Anzahl und die Querschnitte der Rohrstücke vorbestimmten Strömen nach oben vordringen und infolge des Kontakts mit der Kernschmelze verdampfen. Die Schmelze soll dadurch gekühlt und fragmentiert werden, bevor sie den Boden der Auffangwanne erreichen kann.

Für diesen Vorgang muss das Kühlwasser im Raum unter der Auffangwanne unter einem ausreichend hohen Druck stehen.

Durch die Fragmentierung entstehen in der bereits etwas abgekühlten Schmelze Hohlräume oder Kanäle. Die Schmelze bekommt dadurch eine deutlich vergrößerte Oberfläche. In diese Hohlräume oder Kanäle kann später Kühlwasser eindringen und eine vollständige Abkühlung bis zum Erstarren der Schmelze bewirken.

Unter ungünstigen Umständen kann bei der bekannten Vorrichtung heiße Schmelze durch die vorhandenen Löcher in der Auffangwanne hindurchtreten oder die Rohrstücke verstopfen. Dadurch kann die Kühlung der Schmelzekonfiguration gefährdet werden. Das Dokument Kuczera B, Nuclear Safety, 45, Superintendent of Documents, Washington, Bd. 34, Nr. 2, 1. April 1993, Seiten 213-229 offenbart eine Vorrichtung zum Fragmentieren und Kühlen einer Kernschmelze mit einem porösen Körper, der eine Opferschicht einschließt, die nicht geflutet wird.

Der Erfindung liegt die Aufgabe zugrunde, eine Vorrichtung zum Auffangen und Kühlen einer Schmelze anzugeben, bei der das Kühlmittel nicht durch Löcher in einer Auffangwanne und durch dort angeordnete Rohrstücke hindurch geleitet werden muss. Eine direkte Verbindung für die Schmelze zum Raum unterhalb der Auffangwanne soll vermieden werden.

Die Aufgabe wird gemäß der Erfindung durch eine Vorrichtung, wie sie im Patentanspruch 1 beansprucht ist, gelöst.

Damit wird der Vorteil erzielt, dass die Schmelze, wenn sie auf den porösen Körper trifft, gleichmäßig durch Kühlmittel gekühlt wird, welches durch die Hohlräume des porösen Körpers zugeführt wird. Die Funktion ist auch sichergestellt für den Fall, dass Schmelze bereits lokal in den porösen Körper eingedrungen ist. Durch die vielfältigen Wege für den Kühlmittelzufluss innerhalb des porösen Körpers ist auch in solchen Fällen eine Kühlung der Schmelze gewährleistet. Die Kühlmittelzufuhr kann somit nicht durch lokale Effekte unterbrochen werden. Die Schmelze kommt in jedem Fall unter ständiger Kühlung auf dem porösen Körper, spätestens aber innerhalb des porösen Körpers, zum Stehen, ohne dass sie mit einer großen Kühlmittelmenge reagieren kann. Der poröse Körper verhindert somit, dass Schmelze mit einer größeren Kühlmittelmenge in Kontakt kommen kann. Vorteilhafterweise kann durch die Wahl des Strömungswiderstandes des porösen Körpers der Kühlmittelstrom im Körper bestimmt und begrenzt werden. Das Kühlmittel wird durch den porösen Körper vorteilhafterweise so verteilt, dass es zu keiner Dampfexplosion kommen kann, die Schmelze aber gut durch das Kühlmittel beaufschlagt wird. Dabei kommt es zunächst zu einer Fragmentierung der Schmelze und erst dann zu einer Abkühlung bis zum vollständigen Erstarren.

Der poröse Körper ist beispielsweise als Schicht ausgebildet und auf eine tragende Unterstruktur aufgebracht. Eine solche Schicht ist in besonderem Maße mechanisch stabil und/oder kann durch zusätzliche Elemente in einfacher Weise stabilsiert werden.

Der poröse Körper kann aus einem porösen Verbundmaterial bestehen. Geeignete Verbundmaterialien sind z.B. poröser Beton, der Zuschlagsstoff und Binder enthält, und/oder Keramik. Der poröse Körper kann dabei auch teilweise aus Beton und teilweise aus Keramik bestehen. Der poröse Körper kann auch aus regelmäßigen und/oder unregelmäßigen Partikeln aufgebaut sein. Zwischen diesen Partikeln bleibt ein Raum für das Kühlmittel frei.

Die Partikel können aus mineralischem Material, Stahl, Guss und/oder aus Keramik bestehen. Diese Stoffe brauchen der heißen Schmelze nicht Stand zu halten, da das Kühlmittel deren Kühlung im Kontaktbereich bewirkt.

Es ist auch möglich, den porösen Körper teilweise aus Partikeln und teilweise aus porösem Verbundmaterial aufzubauen, wobei die verschiedenen Materialien übereinander geschichtet sein können.

Ein geeigneter Strömungswiderstand für das Kühlmittel im porösen Körper kann entweder durch eine entsprechende Porosität des Verbundmaterials und/oder durch die Wahl der Partikelgröße, der Partikelform, bzw. der Partikelmischung bewirkt werden.

Sinnvollerweise kann der poröse Körper durch eine Schicht aus Opfermaterial überdeckt sein. Damit wird der Vorteil erzielt, dass sich die Schmelze zunächst auf dem geeigneten, trockenen Opfermaterial ausbreitet. Indem die Schmelze das Opfermaterial aufschmilzt, lassen sich für den Prozess der Fragmentierung und Kühlung eine besonders günstige Konsistenz und Schichtung der Schmelze einstellen. Gleichzeitig wird die Schmelze, während das Opfermaterial aufschmilzt, bereits abgekühlt.

Der poröse Körper und die Schicht aus Opfermaterial sind in ihrem Grenzbereich beispielsweise vergossen. Sie haften dadurch aneinander.

Nach einem anderen Beispiel sind der poröse Körper und die Schicht aus Opfermaterial durch eine Dichtschicht voneinander getrennt. Durch die Dichtschicht wird verhindert, dass das im porösen Körper vorhandene Kühlmittel vorzeitig mit der Schmelze in Kontakt kommt. Außerdem wird verhindert, dass noch vor Eintreffen der Schmelze Kühlmittel in das Opfermaterial eindringt und dadurch eventuell Struktur und Wirkungsweise des Opfermaterials verändert werden.

Der poröse Körper ist bereits, bevor die Schmelze mit ihm in Kontakt kommen kann, mit Kühlmittel, z.B. Wasser, gefüllt, das unter Druck steht, und z.B. aus einem höher als der poröse Körper liegenden Reservoir gespeist wird. Die Schicht aus Opfermaterial und gegebenenfalls die Dichtschicht auf dem porösen Körper verhindern zunächst das Austreten des Kühlmittels aus dem porösen Körper. Nach Aufschmelzen der Schicht aus Opfermaterial und gegebenenfalls der Dichtschicht dringt das unter Druck stehende Kühlmittel von unten in die Schmelze ein, fragmentiert diese bei gleichzeitiger Verdampfung des Kühlmittels, kühlt sie und läßt sie porös erstarren. In die Hohlräume der porös erstarrenden Schmelze dringt Kühlmittel ein und bewirkt eine schnelle Abkühlung der Schmelze.

Die Dichtschicht kann beispielseise aus Metall und/oder Kunststoff bestehen. Sie muss das Kühlmittel nur solange vom Opfermaterial fernhalten, bis sie von der Schmelze erreicht und aufgeschmolzen wird.

Der poröse Körper ist beispielsweise direkt unter einem Reaktordruckbehälter angeordnet. Der Körper kann Teil einer Auffangwanne sein.

Nach einem anderen Beispiel ist der poröse Körper seitlich versetzt unterhalb eines Reaktordruckbehälter angeordnet und durch einen Kanal mit einer Schmelzauffangeinrichtung verbunden, die sich direkt unterhalb des Reaktordruckbehälters befindet. Durch diesen Kanal kann die Schmelze zum porösen Körper, der Teil einer Auffangwanne sein kann, geleitet werden. Durch die seitliche Anordnung wird der Vorteil erzielt, dass die Anordnung, in der sich der poröse Körper befindet, nicht durch mechanische Lasten, die aus einem Versagen des Reaktordruckbehälters resultieren, beschädigt werden kann.

Das Kühlmittel ist der Unterseite und/oder den Seitenflächen des porösen Körpers zuführbar.

Die Kühlmittelzufuhr erfolgt beispielsweise über einen Kühlkanal, der von einem Kühlmittelreservoir ausgeht. Dadurch ist eine ständige Kühlmittelzufuhr möglich.

Als Kühlmittel dient in der Regel Wasser.

Mit der Vorrichtung nach der Erfindung wird insbesondere der Vorteil erzielt, dass eine gleichmäßige Zuströmung vom Kühlmittel zur Schmelze erreicht wird und dazu im porösen Körper infolge seiner Porosität zahlreiche Vertikal- und Querströmungen des Kühlmittels gegeben sind. Jedes Volumenelement des Körpers wird aus allen Richtungen ausreichend mit Wasser versorgt. Eine auftreffende Schmelze wird durch das eindringende Kühlmittel soweit fragmentiert, dass auf Grund der entstehenden hohen spezifischen Oberfläche ihre Temperatur bis in die Nähe der Kühlmitteltemperatur abgesenkt werden kann. Die Schmelze erstarrt auf dem, spätestens aber im porösen Körper. Da die Schmelze nicht mit einer großen Wassermenge in Wechselwirkung tritt, kann es nicht zu einer gefährlichen Dampfexplosion kommen.

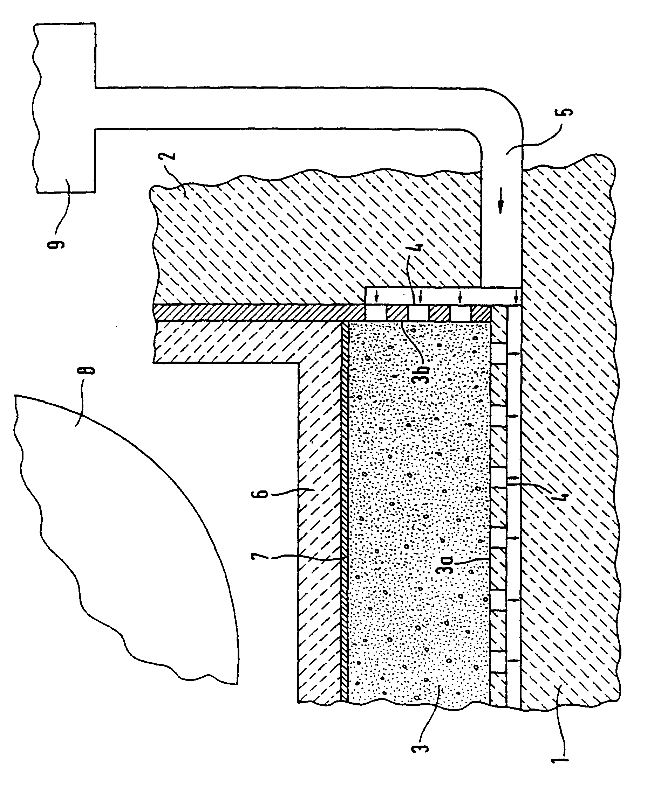

Ein Beispiel für eine Vorrichtung zum Auffangen und Kühlen einer Schmelze nach der Erfindung wird anhand der Zeichnung näher erläutert:
Die Zeichnung zeigt einen vertikalen Schnitt durch ein Containment eines Kernkraftwerkes im Bereich der Bodenplatte und einer Seitenwand.

Das Containment umfasst eine Bodenplatte 1 und auf dieser senkrecht stehende Wände 2. Im Containment ist ein Reaktordruckbehälter 8 angeordnet, von dem in einem unwahrscheinlichen Fall eine Kernschmelze ausgehen könnte. Zum Auffangen und Kühlen einer solchen Schmelze ist auf der Bodenplatte 1 ein poröser Körper 3 angeordnet. Zur Kühlung enden direkt an diesem porösem Körper 3 zahlreiche Kühlmittelleitungen 4, die verzweigt sein können. Das Kühlmittel ist hier Wasser. Es erreicht die Kühlmittelleitungen 4 über einen Kühlkanal 5, der von einem Kühlmittelreservoir 9 ausgeht. Wenn das Reservoir 9 auf einem hinreichend hohen Niveau ist, ist keine Kühlmittelpumpe erforderlich.

Das Kühlmittel dringt in die Hohlräume des porösen Körpers 3 ein und kann sich dort in verschiedene Richtungen ausbreiten, ohne dass große Ansammlungen von Kühlmittel entstehen. Wenn später heiße Schmelze mit dem porösen Körper 3 in Kontakt kommt, wird die Schmelze durch das unter Vordruck stehende, eintretende Kühlmittel zuverlässig abgekühlt, ohne dass es zu einer gefährlichen Dampfexplosion mit Folgeschäden kommen kann. Die Schmelze wird fragmentiert und kommt im allgemeinen oberhalb, spätestens jedoch innerhalb des porösen Körpers 3 zum Stehen. Sie weist dann durch die Fragmentierung Hohlräume auf, in die Kühlwasser eindringt und eine weitere Abkühlung bis zum vollständigen Erstarren bewirkt.

Der poröse Körper 3 ist durch eine Schicht aus Opfermaterial 6 überdeckt. Dieses Opfermaterial 6 wird bei Auftreffen der Schmelze aufgeschmolzen und es bildet sich eine Mischung aus dem Material der Schmelze und dem Opfermaterial 6. Das Opfermaterial 6 ist so gewählt, dass diese Mischung eine günstige Konsistenz und Schichtung für die Fragmentation und damit für die spätere Kühlung hat. Außerdem wird die heiße Schmelze im Kontakt mit dem Opfermaterial 6 bereits etwas abgekühlt. Das Opfermaterial 6 kann z.B. aus einem niedrig schmelzenden Beton bestehen, durch den der Schmelzpunkt und die Dichte der Mischung abgesenkt wird.

Zwischen dem porösen Körper 3 und dem Opfermaterial 6 ist im gezeigten Beispiel eine Dichtschicht 7 aus Metall oder Kunststoff angeordnet. Diese dient hauptsächlich dazu, im ungestörten Fall das im porösen Körper 3 befindliche Kühlmittel vom Opfermaterial 6 fernzuhalten, damit dessen Eigenschaften unverändert bleiben.

Die Kühlmittelleitungen 4 enden in der Regel an der Unterseite 3a des porösen Körpers 3. Dadurch ist eine ausreichende Versorgung des porösen Körpers 3 mit Kühlmittel gewährleistet. Um eine noch bessere Versorgung sicherzustellen, können einige Kühlmittelleitungen 4 auch an den Seitenflächen 3b des porösen Körpers 3 enden.

Mit der gezeigten Vorrichtung erstarrt eine heiße Schmelze auf dem porösen Körper 3, jedenfalls aber noch bevor sie die Bodenplatte 1 erreichen kann. Bei diesem Vorgang wird vermieden, dass die heiße Schmelze gleichzeitig mit großen Kühlmittelmengen in Kontakt kommt. Es kann folglich nicht zu einer Dampfexplosion, die Folgeschäden verursachen könnte, kommen.

## Patentansprüche

1. Vorrichtung zum Auffangen, Fragmentieren und anschließendem Kühlen einer Kernschmelze in einem Containment eines Kernkraftwerkes mit einem porösen Körper (3), dem unter einem Vordruck stehendes Kühlmittel mit durch den Strömungswiderstand des porösen Körpers (3) begrenzter Zuströmrate zuführbar ist,
**dadurch gekennzeichnet, dass** Hohlräume des porösen Körpers (3) mit unter Druck stehendem Kühlmittel gefüllt sind, und dass das Kühlmittel der Unterseite (3a) und den Seitenflächen (3b) des porösen Körpers (3) über Kanäle großflächig zuführbar ist.

2. Vorrichtung nach Anspruch 1,
**dadurch gekennzeichnet, dass** der poröse Körper (3) als Schicht ausgebildet und auf eine tragende Unterstruktur aufgebracht ist.

3. Vorrichtung nach einem der Ansprüche 1 oder 2,
**dadurch gekennzeichnet, dass** der poröse Körper (3) aus einem porösen Verbundmaterial besteht.

4. Vorrichtung nach Anspruch 3,
**dadurch gekennzeichnet, dass** das Verbundmaterial poröser Beton, der Zuschlagsstoff und Binder enthält, und/oder Keramik ist.

5. Vorrichtung nach einem der Ansprüche 1 bis 4,
**dadurch gekennzeichnet, dass** der poröse Körper (3) aus regelmäßigen und/oder unregelmäßigen Partikeln aufgebaut ist.

6. Vorrichtung nach Anspruch 5,
**dadurch gekennzeichnet, dass** die Partikel aus mineralischem Material, Stahl, Guss und/oder aus Keramik bestehen.

7. Vorrichtung nach einem der Ansprüche 1 bis 6,
**dadurch gekennzeichnet, dass** der poröse Körper (3) durch eine Schicht aus Opfermaterial (6) überdeckt ist.

8. Vorrichtung nach Anspruch 7,
**dadurch gekennzeichnet, dass** der poröse Körper (3) und die Schicht aus Opfermaterial (6) in ihrem Grenzbereich vergossen sind.

9. Vorrichtung nach Anspruch 7,
**dadurch gekennzeichnet, dass** der poröse Körper (3) und die Schicht aus Opfermaterial (6) durch eine Dichtschicht (7) voneinander getrennt sind.

10. Vorrichtung nach Anspruch 9,
**dadurch gekennzeichnet, dass** die Dichtschicht (7) aus Metall und/oder Kunststoff besteht.

11. Vorrichtung nach einem der Ansprüche 1 bis 10,
**dadurch gekennzeichnet, dass** der poröse Körper (3) direkt unterhalb eines Reaktordruckbehälters (8) angeordnet ist.

12. Vorrichtung nach einem der Ansprüche 1 bis 10,
**dadurch gekennzeichnet, dass** der poröse Körper (3) seitlich versetzt unterhalb eines Reaktordruckbehälters (8) angeordnet und durch einen Kanal mit einer Schmelzeauffangeinrichtung verbunden ist.

13. Vorrichtung nach einem der Ansprüche 1 bis 12,
**dadurch gekennzeichnet, dass** die Kühlmittelzufuhr über einen Kühlkanal (5) erfolgt, der von einem Kühlmittelreservoir (9) ausgeht.

## Claims

1. A device for collection, fragmentation and subsequent cooling of a core melt in a containment of a nuclear power plant, having a porous body (3), to which a coolant subjected to an admission pressure can be supplied at an inflow rate limited by the flow resistance of the porous body (3),
**characterized in that** hollow spaces of the porous body (3) are filled with coolant subjected to pressure and **in that** the coolant can be supplied over a large surface to the underside (3a) and the side faces (3b) of the porous body (3).

2. The device of claim 1,
**characterized in that** the porous body (3) is formed as a layer and is applied on a carrying substructure.

3. The device of any of claims 1 or 2,
**characterized in that** the porous body (3) consists of a porous composite material.

4. The device of claim 3,
**characterized in that** the composite material is porous concrete containing aggregate and binder, and/or ceramic.

5. The device of any of claims 1 to 4,
**characterized in that** the porous body (3) is made up of regular and/or irregular particles.

6. The device of claim 5,
**characterized in that** the particles consist of mineral material, steel, cast iron and/or ceramic.

7. The device of any of claims 1 to 6,
**characterized in that** the porous body (3) is covered by a layer of sacrificial material (6).

8. The device of claim 7,
**characterized in that** the porous body (3) and the layer of sacrificial material (6) are cast in their limit area.

9. The device of claim 9
**characterized in that** the porous body (3) and the layer of sacrificial material (6) are separated from each other through a sealing layer (7).

10. The device of any of claims 1 to 10,
**characterized in that** the sealing layer (7) consists of metal and/or synthetic material.

11. The device of any of claims 1 to 10,
**characterized in that** the porous body (3) is arranged directly below a reactor pressure vessel (8).

12. The device of any of claims 1 to 10,
**characterized in that** the porous body (3) is arranged with a lateral offset below a reactor pressure vessel (8) and is connected through a channel with a melt collecting device.

13. The device of any of claims 1 to 12,
**characterized in that** the coolant supply is effected via a cooling channel (5) starting from a coolant tank (9).

## Revendications

1. Dispositif pour la collection, la fragmentation et le refroidissement suivant, d'une fonte de coeur dans un confinement d'une centrale nucléaire, ayant un corps poreux (3) auquel un fluide de refroidissement sujet à une pression d'admission peut être alimenté à un taux d'affluence limité par la resistance de flux du corps poreux (3),
**caractérisé en ce que** des espaces creux du corps poreux (3) sont remplis de fluide de refroidissement sujet à pression et **en ce que** le fluide de refroidissement peut être alimenté sur une grande surface à la face inférieure (3a) et aux faces latérales (3b) du corps poreux (3).

2. Dispositif selon la revendication 1,
**caractérisé en ce que** le corps poreux (3) est formé comme une couche et est appliqué sur une substructure portante.

3. Dispositif selon l'une quelconque des revendications 1 ou 2,
**caractérisé en ce que** le corps poreux (3) consiste en une matière composite poreux.

4. Dispositif selon la revendication 3,
**caractérisé en ce que** la matière composite est de l'acier poreux contenant un agrégat et un liant, et/ou une céramique.

5. Dispositif selon l'une quelconque des revendications 1 à 4,
**caractérisé en ce que** le corps poreux (3) est constitué de particules réguliers et/ou irréguliers.

6. Dispositif selon la revendication 5,
**caractérisé en ce que** les particules consistent en une matière minérale, en acier, fonte de fer et/ou céramique.

7. Dispositif selon l'une quelconque des revendications 1 à 6,
**caractérisé en ce que** le corps poreux (3) est recouvert d'une couche de matière sacrificielle (6).

8. Dispositif selon la revendication 7,
**caractérisé en ce que** le corps poreux (3) et la couche de matière sacrificielle (6) sont fondus dans leur région limite.

9. Dispositif selon la revendication 9
**caractérisé en ce que** le corps poreux (3) et la couche de matière sacrificielle (6) sont séparés l'un de l'autre par une couche d'étanchement (7).

10. Dispositif selon l'une quelconque des revendications 1 à 10,
**caractérisé en ce que** la couche d'étanchement (7) consiste en métal et/ou en une matière synthétique.

11. Dispositif selon l'une quelconque des revendications 1 à 10,
**caractérisé en ce que** le corps poreux (3) est disposé directement au-dessous de la cuve sous pression (8) d'un réacteur.

12. Dispositif selon l'une quelconque des revendications 1 à 10,
**caractérisé en ce que** le corps poreux (3) est disposé avec un déport latéral au-dessous de la cuve sous pression (8) d'un réacteur et est relié par un canal avec un dispositif de collection de fonte.

13. Dispositif selon l'une quelconque des revendications 1 à 12,
**caractérisé en ce que** l'alimentation de fluide de refroidissement est effectuée au moyen d'un canal de refroidissement (5) partant d'un réservoir (9) de fluide de refroidissement.
